# EUROPEAN PATENT APPLICATION

(11) **EP 2 584 162 A1**
(43) Date of publication of application: **24.04.2013**
(21) Application number: 10853579.0
(22) Date of filing: 21.06.2010
(51) Int. Cl.: F01N 3/20, F01N 3/24

(54) **EXHAUST HEATING APPARATUS**

(71) Applicant: TOYOTA JIDOSHA KABUSHIKI KAISHA, Toyota-shi, Aichi-ken, 471-8571 (JP)
(72) Inventor: MORI, Taiichi, Toyota-shi, Aichi 471-8571 (JP)
(74) Representative: Intès, Didier Gérard André
(86) International application number: PCT/JP2010/004127
(87) International publication number: WO 2011/161716

(57) **Abstract**

An exhaust gas heating apparatus (31) according to the present invention comprises an expansion chamber (37) having an inflow port (42) and an outflow port (43), a fuel supplying element (38) for supplying fuel into the expansion chamber, a the fuel diffusing plate (39) for dispersing the fuel in the expansion chamber, and ignition means (40) for igniting the fuel in the expansion chamber, wherein an exhaust passage (28) communicated with the inflow port is connected tangentially to a circular peripheral surface (37a) of the expansion chamber, an axis (A) thereof is offset from an axis (B) of the exhaust passage communicated with the outflow port, and the fuel diffusing plate extends along the peripheral surface of the expansion chamber from close proximity of the inflow port in such a manner as to form a partition between the inflow and outflow ports.

## Description

### TECHNICAL FIELD

The present invention relates to an exhaust gas heating apparatus for an internal combustion engine provided with an exhaust emission purifier for increasing a temperature of an exhaust gas for activation of the exhaust emission purifier and maintenance of an active state thereof.

### BACKGROUND ART

Patent Literature 1 or Patent Literature 2 discloses an internal combustion engine incorporating an exhaust gas heating apparatus in an exhaust passage upstream of an exhaust emission purifier for accelerating activation of the exhaust emission purifier at startup of the internal combustion engine or for maintaining an active state thereof during the operating of the internal combustion engine. The exhaust gas heating apparatus generates heated gases in the exhaust gas and supplies the generated heated gases to the exhaust emission purifier at the downstream side to accelerate the activation of the exhaust emission purifier and maintain the active state thereof. Therefore, the exhaust gas heating apparatus generally includes a fuel supplying element for supplying fuel into the exhaust passage and an ignition device such as a glow plug which heats and ignites the fuel to generate heated gases. Further, there is known an exhaust gas heating apparatus in which, for increasing a temperature of the heated gas, a small sized oxidation catalytic converter is disposed in the exhaust passage downstream of the ignition device. The oxidation catalytic converter has a heat generating function on its own and a reforming function of fuel to a low carbon component, but differs in construction from an oxidation catalytic converter used as a part of the exhaust emission purifier.

### CITATION LIST

### PATENT LITERATURE

PTL1: Japanese Patent Laid-Open No. 2009-156164
PTL2: Japanese Patent Laid-Open No. 2009-209804

### SUMMARY OF INVENTION

### Technical Problem.

In the exhaust gas heating apparatus disclosed in Patent Literature 1 or Patent Literature 2, in a case of a driving condition where an intake quantity in the internal combustion engine increased, a flow speed of the exhaust gas flowing in the exhaust passage also relatively increases. Therefore, there is a possibility that the fuel supplied from the fuel supplying element of the exhaust gas heating apparatus to the exhaust passage can not remain in the periphery of the ignition device, and even if the fuel is ignited, the flame is blown out by the flow of the exhaust gas, and the unburned fuel flows into the exhaust emission purifier side. Such a defect particularly remarkably occurs at the operating of an engine brake when an exhaust temperature tends to be easily lowered by stopping supply of the fuel to a combustion chamber.

An object of the present invention is to provide an exhaust gas heating apparatus for an internal combustion engine which can continue to stably perform ignition of fuel even in a driving condition where a great number of low-temperature exhaust gases

### Solution to Problem

An exhaust gas heating apparatus according to the present invention is the exhaust gas heating apparatus for an internal combustion engine for heating an exhaust gas introduced to an exhaust emission purifier from the internal combustion engine, the exhaust gas heating apparatus comprises an expansion chamber having an inflow port into which the exhaust gas flows and an outflow port for discharging the exhaust gas inpouring from the inflow port, wherein the inflow port and the outflow port are communicated with an exhaust passage, a fuel supplying element disposed in the expansion chamber to supply fuel into the expansion chamber, a fuel diffusing plate disposed in the expansion chamber to be opposed to the fuel supplying element, wherein the fuel supplied into the expansion chamber from the fuel supplying element collides with the fuel diffusing plate to be dispersed in the expansion chamber, and ignition means disposed in the expansion chamber to ignite the fuel supplied into the expansion chamber from the fuel supplying element, wherein the expansion chamber has a circular peripheral surface, the exhaust passage communicated with the inflow port is connected tangentially to the peripheral surface of the expansion chamber, wherein an axis thereof is offset from an axis of the exhaust passage communicated with the outflow port, and the fuel diffusing plate extends along the peripheral surface of the expansion chamber from close proximity of the inflow port in such a manner was to form a partition between the inflow port and the outflow port of the expansion chamber.

"The offset state" in the present invention indicates a state where the axis of the exhaust passage communicated with the inflow port and the axis of the exhaust passage communicated with the outflow port do not line up in a straight-line manner. Therefore, the exhaust gas flowing into the expansion chamber via the inflow port from the exhaust passage forms a swirling stream along the peripheral surface of the expansion chamber. The fuel supplied from the fuel supplying element collides, with the fuel diffusing plate to be dispersed, flowing along the swirling stream inside the expansion chamber. The ignition means ignites the fuel to increase a temperature of the exhaust gas. The exhaust gas the temperature of which has become high by the combustion of the fuel in the expansion chamber is sent out from the outflow port via the exhaust passage to the exhaust emission purifier.

In the exhaust gas heating apparatus according to the present invention, the exhaust gas heating apparatus may further comprise an oxidation catalytic converter disposed in the exhaust passage between the expansion chamber and the exhaust emission purifier.

The fuel supplying element and the ignition means may be disposed away from the inflow port of the expansion chamber.

An exhaust turbine of a turbocharger may be disposed in the exhaust passage upstream of the expansion chamber so that a swirling stream of the exhaust gas generated by the exhaust turbine is introduced into the expansion chamber.

### Advantageous Effects of Invention

According to the exhaust gas heating apparatus for the internal combustion engine in the present invention, the fuel diffusing plate with which the fuel supplied into the expansion chamber from the fuel supplying element collides can disperse the fuel in the expansion chamber. In addition, the flow speed of the exhaust gas flowing from the exhaust passage via the inflow port into the expansion chamber can be reduced and simultaneously the swirling stream can be formed. Therefore, this swirling stream enables the exhaust gas which has flown into the expansion chamber to stay in the expansion chamber for a longer period of time, along with the existence of the fuel diffusing plate serving as a partition between the inflow port and the outflow port. As a result, even in a high-speed driving region of the internal combustion engine where the flow speed of the exhaust gas increases or even if a greater amount of the fuel is supplied into the expansion chamber, there does not occur the defect of blowing out the flame generated by the combustion of the fuel. Therefore,the stable combustion of the fuel supplied into the expansion chamber can continues to be performed to supply a higher-temperature exhaust gas to the exhaust catalytic device.

In a case where the catalytic converter oxidation disposed in the exhaust passage between the expansion chamber and the exhaust emission purifier is provided, the temperature control of the exhaust emission purifier can be more efficiently performed.

In a case where the fuel supplying element and the ignition means are disposed away from the inflow port in the expansion chamber, since supply and ignition of the fuel are carried out in a region where the flow speed of the exhaust gas is more stable, the flame can be difficult to blow out.

In a case where the exhaust turbine of the turbocharger is disposed in the exhaust passage upstream of the expansion chamber and the swirling stream of the exhaust gas generated by the exhaust turbine is introduced into the expansion chamber, the fuel to be supplied into the expansion chamber can be more uniformly dispersed.

### BRIEF DESCRIPTION OF DRAWINGS

Fig. 1 is an outline diagram schematically showing an embodiment of an engine system in which an exhaust gas heating apparatus for an internal combustion engine according to the present invention is incorporated;
Fig. 2 is a front view showing a part corresponding to the exhaust gas heating apparatus in the embodiment shown in Fig. 1;
Fig. 3 is a flow chart showing the operation procedure of the exhaust gas heating apparatus in the embodiment shown in Fig. 1;
Fig. 4 is an outline diagram schematically showing another embodiment of an exhaust gas heating apparatus for an internal combustion engine according to the present invention;
Fig. 5 is an outline diagram schematically showing a different embodiment of an exhaust gas heating apparatus for an internal combustion engine according to the present invention
Fig. 6 is an outline diagram schematically showing a further different embodiment of an exhaust gas heating apparatus for an internal combustion engine according to the present invention; and
Fig. 7 is an outline diagram schematically showing a furthermore different embodiment of an exhaust gas heating apparatus for an internal combustion engine according to the present invention.

### Description of Embodiments

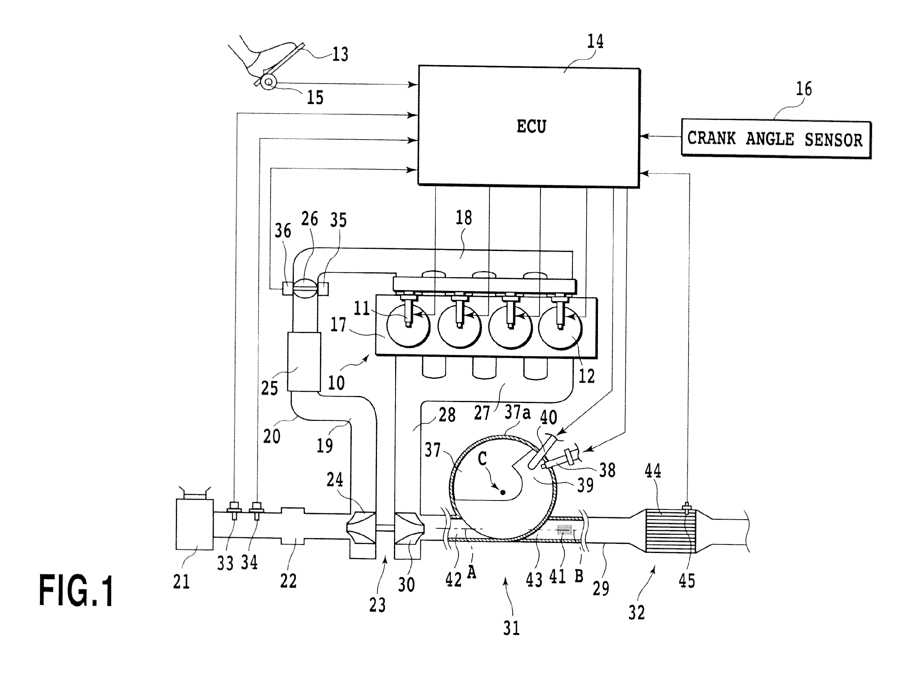

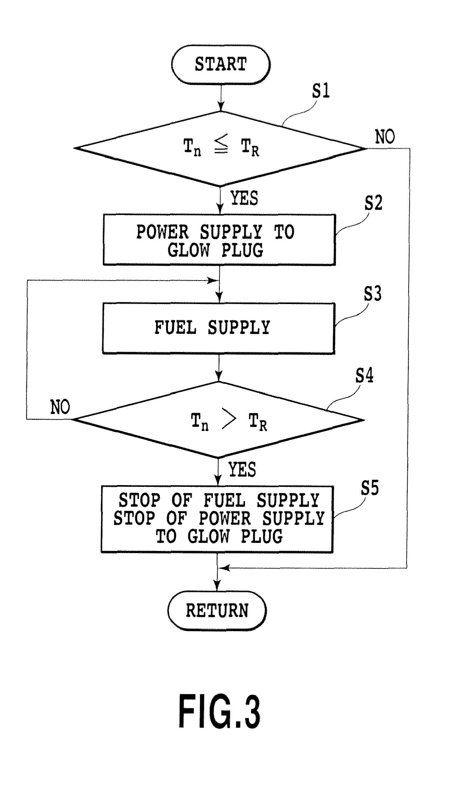

An embodiment, in which the present invention is applied to a multi-cylinder internal combustion engine of a compression ignition type incorporating an exhaust emission purifier therein, will be in detail explained with reference to Figs. 1 to 3. However, the present invention is not limited thereto, but the construction thereof can be freely changed in accordance with required characteristics. For example, the present invention is effective in a spark ignition type internal combustion engine in which fuel such as gasoline, alcohol, or LNG (Liquefied Natural Gas) is ignited by a spark plug.

A major part of an engine system in the present embodiment is schematically shown in Fig. 1, but a valve-actuating mechanism for intake/exhaust, an EGR device and the like are omitted in illustration for convenience. An engine 10 in the present embodiment is a multi-cylinder (four cylinders in the illustration example) internal combustion engine of a compression ignition type in which light oil as fuel is directly injected into a combustion chamber 12 in a compressed state from a fuel injector 11 to create spontaneous ignition. In consideration of the characteristic of the present invention, however, a single-cylinder internal combustion engine may be applied as the engine. A quantity and injection timing of the fuel to be supplied into the combustion chamber 12 from the fuel injector 11 are controlled based upon a depressing amount of an accelerator pedal 13 by a driver and a driving condition of a vehicle by an ECU (Electric Control Unit) 14. The depressing amount of the accelerator pedal 13 is detected by an accelerator position sensor 15 and the detection information is outputted to the ECU 14. In addition, a crank angle phase of the engine 10 among driving conditions of the vehicle is detected by a crank angle sensor 16 and the detection information is outputted to the ECU 14.

A cylinder head 17 in which the valve-actuating mechanism (not shown) and the like are incorporated is provided also with an intake manifold 18 mounted thereon to be communicated with each combustion chamber 12. In an intake passage 20 defining an intake passage 19 together with the intake manifold 18, an air cleaner 21, a surge tank 22, a compressor 24 of a turbocharger 23, an intercooler 25, and throttle valve 26 are arranged in that order from the upstream side. In addition, an exhaust pipe 29 defining an exhaust passage 28 together with an exhaust manifold 27 mounted on the cylinder head 17, an exhaust turbine 30 of the turbocharger 23, an exhaust gas heating apparatus 31 in the present invention, and an exhaust emission purifier 32 are arranged in that order from the upstream side.

An air flow meter 33 and an intake temperature sensor 34 are arranged in the intake passage 19 between the air cleaner 21 and the surge tank 22, wherein the air flow meter 33 detects a flow quantity of intake air flowing in the intake passage 19 and outputs the detected flow quantity to the ECU 14, and the intake temperature sensor 34 detects a temperature of the intake air and outputs the detected temperature to the ECU 14.

The throttle valve 26 is configured such that an opening degree thereof is controlled based upon a depressing amount of the accelerator pedal 13 and a driving condition of the vehicle by a throttle drive motor 35. The opening degree of the throttle valve 26 is detected by a throttle position sensor 36, which outputs the detection information two the ECU 14. The ECU 14 controls an operation of the throttle drive motor 35 in such a manner that the throttle valve 26 opens by a predetermined opening degree based upon the driving condition of the vehicle and the detection information of the accelerator position sensor 15 and the throttle position sensor 36. It should be noted that it is possible to establish a mechanical link between the throttle valve 26 and the accelerator pedal 13 by omitting the throttle drive motor 35, and it is possible to omit the throttle valve 26 in a compression ignition type internal combustion engine.

The exhaust gas heating apparatus 31 generates heated gases and supplies the heated gases to the exhaust emission purifier 32 at the downstream side to perform the activation of the exhaust emission purifier 32 and maintain the active state thereof. The exhaust gas heating apparatus 31 in the present embodiment is provided with an expansion chamber 37, a fuel injector 38, a fuel diffusing plate 39, a glow plug 40 as ignition means in the present invention and an oxidation catalytic converter 41.

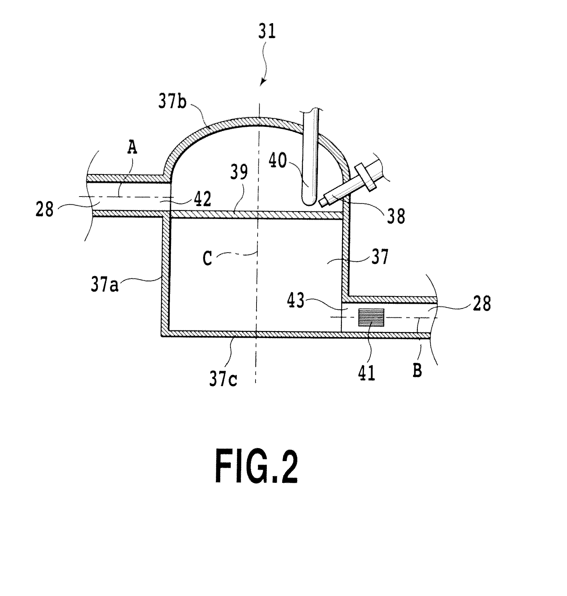

A side configuration of the expansion chamber 37 shown in Fig. 1 is schematically shown in Fig. 2. The expansion chamber 37 is defined by a peripheral wall 37a having a peripheral surface formed in a circular tubular shape, a semispherical upper wall 37b positioned at an end (upper side in Fig. 2) to project outside, and a bottom wall 37C positioned at the opposite side, that is, at the lower side in Fig. 2. An inflow port 42 into which an exhaust gas flows is formed at one end of the peripheral wall 37a, and an outflow port 43 for discharging the exhaust gas flown from the inflow port 42 is formed at the other end of the peripheral wall 37a, wherein the exhaust pipe 29 is connected to the inflow port 42 and the outflow port 43. The exhaust passage 28 communicated with the inflow port 42 is connected tangentially to the peripheral wall 37a in the expansion chamber 37, and an axis A of the exhaust passage 28 is vertically offset from an axis B of the exhaust passage 28 communicated with the outflow port 43. In this case, the exhaust passage 28 communicated with the outflow port 43 is also communicated tangentially with the peripheral wall 37a of the expansion chamber 37, and the exhaust gas flown into the expansion chamber 37 from the inflow port 42 flows out to the exhaust passage 28 outside of the expansion chamber 37 from the outflow port 43 as it is while swirling along the peripheral wall 37a. That is, the expansion chamber 37 functions as a chamber temporarily storing the exhaust gas therein, that is, as an exhaust pool in such a manner that the exhaust flown into the expansion chamber 37 from the inflow port 42 is not immediately discharged outside of the expansion chamber 37 from the outflow port 43. In consequence, even in a state where a flow speed of the exhaust flown into the expansion chamber 37 via the inflow port 42 from the exhaust passage 28 is high, since the flow of the exhaust gas having flown in the expansion chamber 37 is largely reduced, it is possible to avoid a defect that the flame blows off. The exhaust turbine 30 of the turbocharger 23 is disposed in the exhaust passage 28 upstream of the inflow port 42 of the expansion chamber 37 to introduce the swirling stream of the exhaust gas generated by the exhaust turbine 30 into the expansion chamber 37 from the inflow port 42. As a result, the exhaust gas flowing the expansion chamber 37 in a swirling state around the axis A swirls furthermore around the axis C of the peripheral wall 37a in the expansion chamber 37.

The fuel supplying element 38 is disposed in the expansion chamber 37 to supply fuel into the expansion chamber 37, and the supply timing and the supply quantity of the fuel are controlled based upon presence/absence of the active state of the exhaust emission purifier 32 and the driving condition of the vehicle by the ECU 14.

The fuel diffusing plate 39 is disposed in the expansion chamber 37 to be opposed to the fuel supplying element 38 and serves to accelerate vaporization of fuel supplied from the fuel supplying element 38 into the expansion chamber 37 through dispersal of the fuel caused by collision of the fuel with the fuel diffusing plate 39. The fuel diffusing plate 39 is configured to extend along the peripheral wall 37a of the expansion chamber 37 from close proximity of the inflow port 42 in such a manner as to form a partition between the inflow port 42 and the outflow port 43 of the expansion chamber 37, thus accelerating the swirling stream of the exhaust gas around the axis C of the peripheral wall 37a. In the present embodiment, the fuel diffusing plate 39 is disposed to spread to the half-peripheral extent from the inflow port 42 in such a manner as to intersect at right angles to the axis C the peripheral wall 37a, but it should be understood that the configuration and the position of the fuel diffusing plate 39 are not limited to the embodiment illustrated.

The glow plug 40 is disposed in the expansion chamber 37 to ignite the fuel supplied into the expansion chamber 37 from the fuel supplying element 38. The glow plug 40 is connected to a direct current source and a booster circuit (both not shown) for power supply thereto, and a surface temperature thereof is controlled by the ECU 14. The glow plug 40 is disposed away from the inflow port 42 of the expansion chamber 37 together with the fuel supplying element 38, and in the present embodiment, is positioned at the opposing side to the inflow port 42 around the axis C of the peripheral wall 37a. By thugs igniting the fuel in a region where the flow speed of the exhaust gas is slowed, the defect of blowing out the flame with the flow speed of the exhaust gas is avoided. The exhaust gas having flown into the expansion chamber 37 from the inflow port 42 moves and flows along the peripheral wall 37a in the expansion chamber 37 while guided by the fuel diffusing plate 39, leading to a region where the fuel supplying element 38 and the glow plug 40 are disposed. In this case, vaporization of the fuel is accelerated by good mixing of the fuel and the exhaust gas together with bidirectional swirling of the exhaust gas, and as a result, a large part of the exhaust gases supplied from the fuel supplying element 38 is ignited by the glow plug 40 to generate heated gases, which are mixed with the exhaust gas, thus increasing a temperature of the exhaust gas. It should be noted that a ceramic heater may be used instead of the glow plug 40 as the ignition in the present invention.

In the present embodiment, because of the existence of the fuel diffusing plate 39, the liquid fuel collides with the the fuel diffusing plate 39 to scatter in an atomized shape, thereby enabling the fuel of which the atomization is accelerated to be ignited by the glow plug 40. Therefore, ignitability of the fuel can be enhanced even in a cold state to securely increase the temperature of the exhaust gas.

An oxidation catalytic converter 41 disposed in the exhaust passage 28 between the expansion chamber 37 and the exhaust emission purifier 32 has a cross-sectional area smaller than that of exhaust passage 28, therefore, enabling a part of the exhaust gas to pass through the exhaust passage 28 without passing through the oxidation catalytic converter 41. That is, the flow speed of the exhaust gas passing through the oxidation catalytic converter 41 is slower than that of the exhaust gas which does not passing through it, enabling the temperature of the exhaust gas passing through the oxidation catalytic converter 41 to further increase. In a state where the oxidation catalytic converter 41 is sufficiently high in temperature, that is, in an active state thereof, it is possible to cut off power supply to the glow plug 40 and directly burn a mixture in the oxidation catalytic converter 41. However, in a case where the oxidation catalytic converter 41 is not active, such as in a cold start of the engine 10, it is necessary to supply the power to the glow plug 40 for generating flames in the expansion chamber 37. When the oxidation catalytic converter 41 is high in temperature, hydrocarbons having the high number of carbons are decomposed to be reformed to the hydrocarbons of high reactivity having the low number of carbons. In other words, the oxidation catalytic converter 41 itself functions as a quick heating element for quickly generating heat on one hand, and functions as a fuel reforming catalyst for generating the reformed fuel on the other hand.

In this manner, the heated gas is generated in the expansion chamber 37, the exhaust gas a temperature of which becomes high passes through the oxidation catalytic converter 41 to further increase in temperature, and unburned gases also burn by the oxidation catalytic converter 41 or are reformed to high active hydrocarbons. These gases and components are supplied to the exhaust emission purifier 32. As a result, it is possible to quickly perform the activation of the exhaust emission purifier 32 and maintain the active state thereof. Particularly it can be said that the exhaust gas heating apparatus 31 has a remarkable advantage in improving a so-called cold emission state immediately after a cold start of the engine 10.

The exhaust emission purifier 32 serves as a device for rendering harmful substances generated by combustion of the mixture in the combustion chamber 12 to harmless ones. The exhaust emission purifier 32 in the present embodiment is provided with the oxidation catalytic converter 44, a three-way catalyst, and a NOX catalyst in the exhaust passage 28 in that order from the upstream side, but only the oxidation catalytic converter 44 disposed at the most upstream side is illustrated for convenience. A catalytic converter temperature sensor 45 is incorporated in the oxidation catalytic converter 44 to detect a hearth temperature and output the detected temperature to the ECU 14.

The ECU 14 controls the exhaust gas heating apparatus 31, that is, operations of the fuel supplying element 38 and the glow plug 40 according to a preset program based upon a driving condition of the vehicle and a detection signal from the catalytic converter temperature sensor 45. In the present embodiment, in a case where a catalytic converter temperature Tₙ is equal to or lower than T_{R} as an index of the activation based upon the detection signal from the catalytic converter temperature sensor 45, it is determined that the exhaust emission purifier 32 is not activated. In addition, power is supplied to the glow plug 40 and the fuel is supplied into the expansion chamber 37 from the fuel supplying element 38 to increase a temperature of the exhaust gas passing through the expansion chamber 37. In reverse, in a case where the catalytic converter temperature Tₙ is higher than the reference temperature for determining activation T_{R}, it is determined that the exhaust emission purifier 32 is activated, and the fuel supply into the expansion chamber 37 by the fuel supplying element 38 is stopped and also the power supply to the glow plug 40 is cut off.

The control procedure of such an exhaust gas heating apparatus 31 is shown in a flow chart in Fag. 3. That is, at a step of S1 tit is determined whether or not a catalytic converter temperature Tₙ is equal to or lower than a reference temperature for determining activation T_{R}. Here, in a case where it is determined that the catalytic converter temperature Tₙ is higher than the reference temperature for determining activation T_{R}, that is, in a case where it is determined that the exhaust emission purifier 32 is activated, the process ends without executing any further process.

On the other hand, in a case where at a step of S1 it is determined that the catalytic converter temperature Tₙ is equal to or lower than the reference temperature for determining activation T_{R}, that is, in a case where it is determined that the exhaust emission purifier 32 is not activated, the process goes to a step of S2, wherein the power is supplied to the glow plug 40. Further, at a step of S3 fuel is supplied from the fuel supplying element 38 to generate heated gases in the expansion chamber 37, thus aiming at increasing a temperature of the exhaust emission purifier 32. At a step of S4 it is determined whether or not the catalytic converter temperature Tₙ exceeds the reference temperature for determining activation T_{R}. Here, in a case where it is determined that the catalytic converter temperature Tₙ does not exceed the reference temperature for determining activation T_{R,} that is, in a case where it is determined that the exhaust emission purifier 32 is not activated yet, the process goes back to a step of S3, wherein the supply of the fuel continues to be performed and the heated gas continues to be sent to the exhaust emission purifier 32 for accelerating the activation thereof.

In a case where at a step of S4 it is determined that the catalytic converter temperature Tₙ is higher than the reference temperature for determining activation T_{R}, that is, in a case where it is determined that the exhaust emission purifier 32 is activated, the process goes to a step of S5. At a step of S5 the fuel supply into the expansion chamber 37 by the fuel supplying element 38 is stopped and also the power supply to the glow plug 40 is cut off, thus stopping the operation of the exhaust gas heating apparatus 31.

The above control continues to be performer in any driving condition as long as the engine 10 is in the middle of operating. The present embodiment is configured such that the operation of the exhaust gas heating apparatus 31 is controlled based upon the catalytic converter temperature Tₙ, but it is possible to more accurately control the operation of the exhaust gas heating apparatus 31 based upon an intake quantity and an intake temperature or a throttle opening degree and an engine notation speed, and the like.

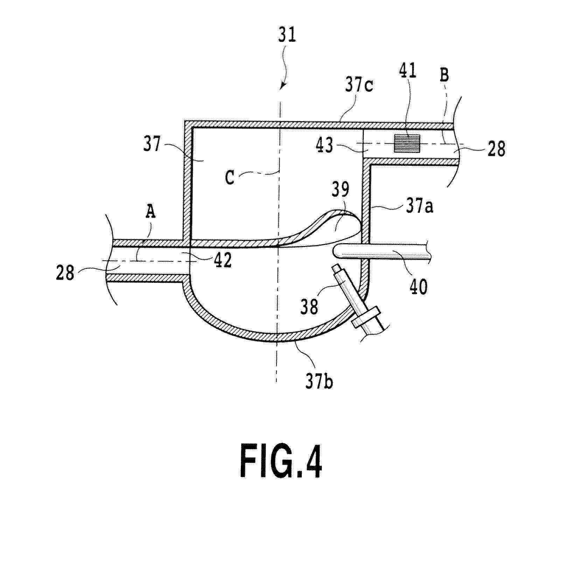

The structure of the expansion chamber 37 is not limited to the above embodiment, and an optimal structure thereof can be adopted in accordance with a desired characteristic. Hereinafter, examples of the structure will be shown in Figs. 4 to 7, but components of functions identical to those in the previous embodiment are referred to as identical codes, and the explanations are omitted.

An embodiment shown in Fig. 4 is configured such that the fuel diffusing plate 39 is mounted on the peripheral wall 37a in a state of being twisted spirally for more easily creating the spiral swirling stream in the expansion chamber 37. The inflow port 42 and the outflow port 43 may be arranged in reverse to the above embodiment, and the expansion chamber 37 may be arranged laterally such that the axis C of the peripheral wall 37a is horizontal.

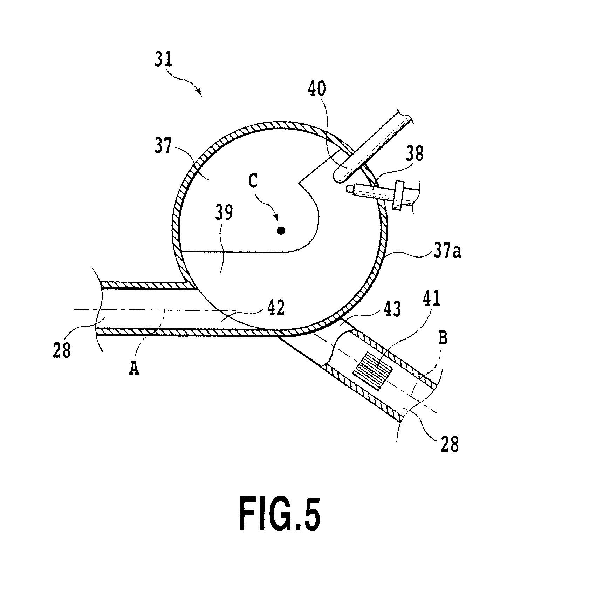

An embodiment shown in Fig. 5 is configured such that the axis A of the exhaust passage 28 communicated with the inflow port 42 intersects stereoscopically with the axis B of the exhaust passage 28 communicated with the outflow port 43.

An embodiment shown in Fag. 6 is configured such that the fuel diffusing plate 39 is amounted on the peripheral wall 37a by being twisted spirally by the same angle as a lead angle of the swirling stream of the exhaust gas in the exhaust passage 28 formed by the exhaust turbine 30 in the turbocharger 23. By adopting such a construction, the swirling stream of the exhaust gas formed by the exhaust turbine 30 is introduced to the side of the outflow port 43 without so much break of the swirling stream in the expansion chamber 37.

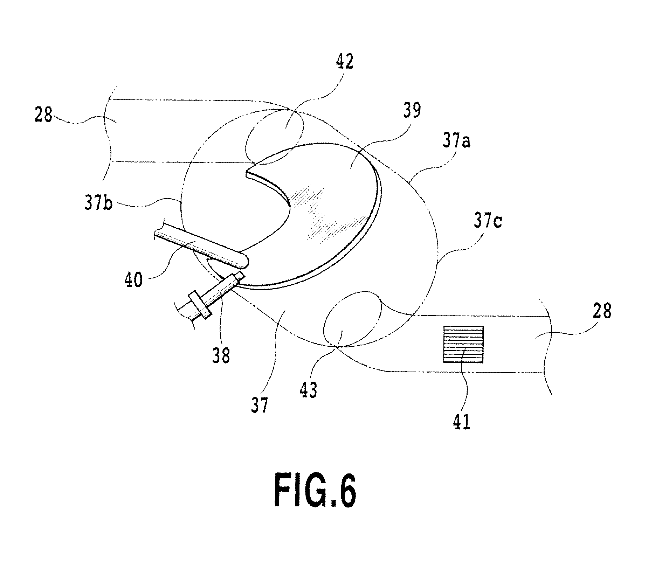

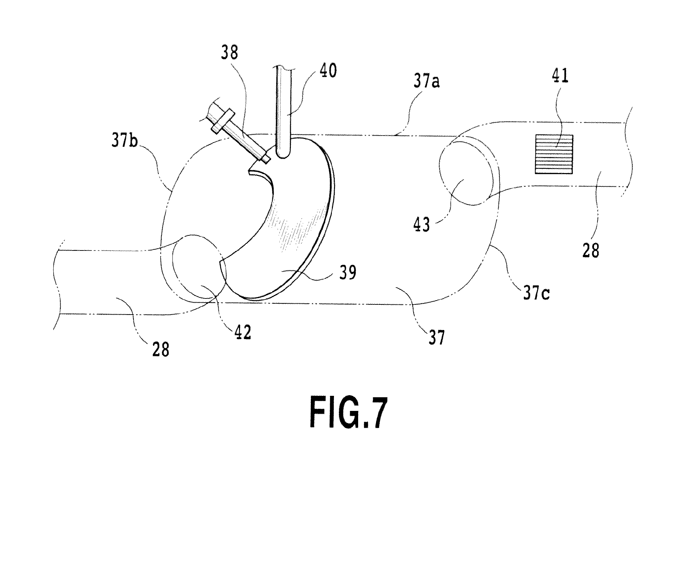

An embodiment shown in Fig. 7 is configured aiming at obtaining the same effect as that of the embodiment shown in Fig. 6, wherein a diameter of the peripheral wall 37a is reduce to be small and the expansion chamber 37 is formed to be elongated as a whole.

It should be nosed that the present invention should be interpreted based only upon matters described in the scope of claims, and in the aforementioned embodiments, all changes and modifications contained within the concept of the present invention can be made in addition to the matters described therein. That is, all the matters in the aforementioned embodiments are not elements for limiting the present invention and can change arbitrarily corresponding to the application and purpose, including all constructions having no direct relation to the present invention.

### REFERENCE SIGNS LIST

| | |
|---|---|
| 10 | ENGINE |
| 11 | FUEL INJECTOR |
| 12 | COMBUSTION CHAMBER |
| 13 | ACCELERATOR PEDAL |
| 14 | ECU |
| 15 | ACCELERATOR POSITION SENSOR |
| 16 | CRANK ANGLE SENSOR |
| 17 | CYLINDER HEAD |
| 18 | INTAKE MANIFOLD |
| 19 | INTAKE PASSAGE |
| 20 | INTAKE PASSAGE |
| 21 | AIR CLEANER |
| 22 | SURGE TANK |
| 23 | TURBOCHARGER |
| 24 | COMPRESSOR |
| 25 | INTERCOOLER |
| 26 | THROTTLE VALVE |
| 27 | EXHAUST MANIFOLD |
| 28 | EXHAUST PASSAGE |
| 29 | EXHAUST PIPE |
| 30 | EXHAUST TURBINE |
| 31 | EXHAUST GAS HEATING APPARATUS |
| 32 | EXHAUST EMISSION PURIFIER |
| 33 | AIR FLOW METER |
| 34 | INTAKE TEMPERATURE SENSOR |
| 35 | THROTTLE DRIVE MOTOR |
| 36 | THROTTLE POSITION SENSOR |
| 37 | EXPANSION CHAMBER |
| 37a | PERIPHERAL WALL |
| 37b | UPPER WALL |
| 37c | BOTTOM WALL |
| 38 | FUEL SUPPLYING ELEMENT |
| 39 | FUEL DIFFUSING PLATE |
| 40 | GLOW PLUG |
| 41 | OXIDATION CATALYTIC CONVERTER |
| 42 | INFLOW PORT |
| 43 | OUTFLOW PORT |
| 44 | OXIDATION CATALYTIC CONVERTER |
| 45 | CATALYTIC CONVERTER TEMPERATURE SENSOR |
| A, B | AXIS OF EXHAUST PASSAGE |
| C | AXIS OF PERIPHERAL WALL |
| Tₙ | CATALYTIC CONVERTER TEMPERATURE |
| T_{R} | REFERENCE TEMPERATURE FOR DETERMINING ACTIVATION |

## Claims

1. An exhaust gas heating apparatus for an internal combustion engine for heating an exhaust gas introduced to an exhaust emission purifier from the internal combustion engine comprising:
an expansion chamber having an inflow port into which the exhaust gas flows and an outflow port for discharging the exhaust gas inpouring from the inflow port, wherein the inflow port and the outflow port are communicated with an exhaust passage;
a fuel supplying element disposed in the expansion chamber to supply fuel into the expansion chamber;
a fuel diffusing plate disposed in the expansion chamber to be opposed to the fuel supplying element, wherein the fuel supplied into the expansion chamber from the fuel supplying element collides with the fuel diffusing plate to be dispersed in the expansion chamber; and
ignition means disposed in the expansion chamber to ignite the fuel supplied into the expansion chamber from the fuel supplying element, wherein
the expansion chamber has a circular peripheral surface,
the exhaust passage communicated with the inflow port is connected tangentially to the peripheral surface of the expansion chamber, wherein an axis thereof is offset from an axis of the exhaust passage communicated with the outflow port, and
the fuel diffusing plate extends along the peripheral surface of the expansion chamber from close proximity of the inflow port in such a manner as to form a partition between the inflow port and the outflow port of the expansion chamber.

2. An exhaust gas heating apparatus for an internal combustion engine according to claim 1, further comprising:
an oxidation catalytic converter disposed in the exhaust passage between the expansion chamber and the exhaust emission purifier.

3. An exhaust gas heating apparatus for an internal combustion engine according to claim 1 or 2, wherein the fuel supplying element and the ignition means are disposed away from the inflow port of the expansion chamber.

4. An exhaust gas heating apparatus for an internal combustion engine according to any of claims 1 to 3, wherein an exhaust turbine of a turbocharger is disposed in the exhaust passage upstream of the expansion chamber, wherein a swirling stream of the exhaust gas generated by the exhaust turbine is introduced into the expansion chamber.
